# EUROPÄISCHE PATENTSCHRIFT

(11) **EP 2 707 207 B1**
(45) Veröffentlichungstag und Bekanntmachung des Hinweises auf die Patenterteilung: **01.08.2018**
(21) Anmeldenummer: 12719258.1
(22) Anmeldetag: 19.04.2012
(51) Int. Cl.: B30B 11/00, B30B 15/32, B30B 11/08

(54) **ABSTREIFEINRICHTUNG FÜR EINE RUNDLÄUFERPRESSE, RUNDLÄUFERPRESSE UND VERFAHREN ZUM BETREIBEN EINER RUNDLÄUFERPRESSE**
STRIPPING DEVICE FOR A ROTARY PRESS, ROTARY PRESS AND METHOD FOR OPERATING A ROTARY PRESS
DISPOSITIF DE DÉMOULAGE POUR UNE PRESSE À PLATEAU TOURNANT, PRESSE À PLATEAU TOURNANT ET PROCÉDÉ PERMETTANT DE FAIRE FONCTIONNER UNE PRESSE À PLATEAU TOURNANT

(30) Priorität: 10.05.2011 DE 102011101287
(43) Veröffentlichungstag der Anmeldung: 19.03.2014
(73) Patentinhaber: Fette Compacting GmbH, 21493 Schwarzenbek (DE)
(72) Erfinder: KOLBE, Sven, 21514 Büchen (DE)
(74) Vertreter: Hauck Patentanwaltspartnerschaft mbB
(86) Internationale Anmeldenummer: PCT/EP2012/001684
(87) Internationale Veröffentlichungsnummer: WO 2012/152368

(56) Entgegenhaltungen:
- EP-A2- 1 338 409
- EP-A2- 2 036 707
- EP-A2- 2 239 133
- DE-A1-102005 051 567
- DE-U1-202005 017 516
- JP-U- 58 107 295
- JP-U- 58 107 296

## Beschreibung

Die Erfindung betrifft eine Rundläuferpresse mit einer Steuereinrichtung und mit einem im Regelfall um eine vertikale Achse drehbaren Rotor, wobei der Rotor eine obere und eine untere Stempelführung für obere und untere Pressstempel und eine Matrizenschreibe zwischen den Stempelführungen aufweist, wobei die Pressstempel mit Aufnahmen der Matrizenscheibe zusammenwirken, ferner mit mindestens einer Füll- und Dosierstation, in der zu verpressendes Material in die Aufnahmen gefüllt wird, weiterhin mit mindestens einer Druckstation, die im Betrieb mit den oberen Pressstempeln und mit den unteren Pressstempeln zusammenwirkt, so dass diese in den Aufnahmen befindliches Material zu Presslingen verpressen, und mit mindestens einer Auswerferstation, in der die Presslinge aus den Aufnahmen auf die Matrizenscheibe gefördert werden. Die Rundläuferpresse umfasst weiterhin eine Abstreifeinrichtung mit mindestens einem Abstreifelement zum Abstreifen von auf einer Matrizenscheibe der Rundläuferpresse befindlichen Presslingen zu einem Ausgang.

Die Erfindung betrifft außerdem ein Verfahren zum Betreiben einer Rundläuferpresse, bei dem in Aufnahmen einer Matrizenscheibe gefülltes Material von Ober- und Unterstempeln zu Presslingen verpresst wird und die Presslinge anschließend auf die Matrizenscheibe gefördert und von einem Abstreifelement von der Matrizenscheibe zu einem Ausgang abgestreift werden.

Ein Beispiel einer Rundläuferpresse ist in DE 10 2007 057 791 B4 gezeigt. Neben mindestens einer Füll- und Dosierstation, in der das zu verpressende Material in Aufnahmen der Matrizenscheibe gefüllt wird, und einer Druckstation, in der das in die Aufnahmen gefüllte Material mittels oberen und unteren Pressstempeln zu Presslingen, insbesondere Tabletten, verpresst wird, umfassen derartige Rundläuferpressen insbesondere auch eine Auswerferstation. In dieser werden die hergestellten Tabletten üblicherweise durch Anheben der Unterstempel auf die Oberseite der Matrizenscheibe gefördert. Ein in Drehrichtung des Rotors nachgeordnetes, ortsfest angeordnetes Abstreifelement streift die auf der rotierenden Matrizenscheibe befindlichen Tabletten von der Matrizenscheibe ab und befördert sie in einen Ausgang, der beispielweise in einen Ablaufkanal führt. Derartige Abstreifelemente umfassen in der Regel weiterhin eine Aussortierdüse, die aufgrund von Qualitätsmängeln auszusortierende Tabletten mittels gerichteter Druckluft in einen Schlechtkanal aussortiert.

Mit derartigen Rundläuferpressen werden in der Regel Presslinge unterschiedlicher Größe hergestellt. Die Abstreifelemente umfassen häufig eine Krümmung, entlang der die Presslinge unter der Wirkung der unter dem ortsfesten Abstreifelement rotierend fortbewegten Matrizenscheibe zu dem Ausgang geführt werden. Abhängig von der Größe der Tabletten, insbesondere ihrem Durchmesser, oder bei nicht kreisrunder Form, einer anderen charakteristischen Abmessung, werden die Abstreifelemente dabei individuell positioniert, um eine ordnungsgemäße Führung durch das Abstreifelement zu gewährleisten. Dies geschieht in der Regel manuell durch eine Bedienperson. Üblicherweise wird das Abstreifelement von der Bedienperson in radialer Richtung über der Matrizenscheibe verschoben, um dieses an unterschiedliche Tablettendurchmesser oder -abmessungen anzupassen.

Dieses bekannte Vorgehen birgt einige Probleme. Zum einen kann es durch die Neupositionierung des Abstreifelements zu Winkelveränderungen zwischen der Aussortierdüse und den Tabletten kommen. Es besteht dann die Gefahr, dass eine ordnungsgemäße Aussortierung von Schlechttabletten durch die Aussortierdüse nicht mehr gewährleistet ist. Außerdem ist aufgrund der häufig stufenlosen Verschiebbarkeit des Abstreifelements nicht sichergestellt, dass das Abstreifelement durch die Bedienperson für die jeweilige Tablettengröße korrekt positioniert wird. Hierdurch können die Tabletten beim Abstreifen stark belastet werden. Dies kann zu einer Beschädigung und sogar zu einem Bruch der Tabletten führen. Da eine Aussortierung von Schlechttabletten in Förderrichtung der Tabletten üblicherweise vor dem eigentlichen Abstreifvorgang erfolgt, kann eine erst im Zuge des Abstreifvorgangs beschädigte oder zerbrochene Tablette nicht mehr aussortiert werden. Schlechttabletten werden daher unter Umständen dem Tablettenausgang für ordnungsgemäße Tabletten zugeführt.

Aus EP 1 338 409 A2 ist eine Rundläuferpresse bekannt, bei der zumindest ein Teil der Komponenten und/oder Baugruppen einen Transponder aufweisen, in dem mindestens eine die Komponenten und/oder Baugruppe kennzeichnende Identitätsnummer gespeichert ist. Weiterhin ist mindestens ein mit dem Rechnersystems verbundener Lesekopf vorgesehen, mit dem der Transponder der Komponente und/oder Baugruppe auch im eingebauten Zustand drahtlos abgelesen werden kann. In einem Rechnersystem werden die ausgelesenen Daten mit einem vorgegebenen Programm für die Anordnung und/oder Funktion oder dergleichen der Komponenten und/oder Baugruppen verglichen.

Aus DE 20 2005 017 516 U1 ist eine Rundläufer-Tablettiermaschine bekannt, bei der einzelne Baugruppen und/oder Einzelteile von Baugruppen austauschbar sind. Jede Baugruppe und/oder jedes Einzelteil einer Baugruppe umfasst einen die Baugruppe und/oder das Einzelteil eindeutig identifizierenden Transponder. Der Rundläufer-Tablettiermaschine ist wenigstens eine Sende-/Empfangseinheit zum Auslesen der Transponder zugeordnet.

Aus EP 2 239 133 A2 und EP 2 036 707 A2 ist der Einsatz optischer Sensoren zur Überwachung von Betriebs- oder Prozessbedingungen bekannt. Außerdem sind aus JP 58-107295 U und JP 58-107296 U Abstreifeinrichtungen bekannt. Das Dokument DE 20 2005 017516 U1 offenbart eine Rundläuferpresse gemäss dem Oberbegriff des Anspruchs 1 und ein Verfahren zum Betreiben einer Rundläuferpresse gemäss dem Oberbegriffs des Anspruchs 9. Ausgehend von dem erläuterten Stand der Technik liegt der Erfindung die Aufgabe zugrunde, eine Rundläuferpresse und ein Verfahren der eingangs genannten Art bereitzustellen, mit denen eine Beschädigung von Presslingen durch das Abstreifelement vermieden und eine sichere Aussortierung von Schlechttabletten gewährleistet wird.

Gelöst wird diese Aufgabe durch die Gegenstände der Ansprüche 1 und 9. Vorteilhafte Ausgestaltungen finden sich in den abhängigen Ansprüchen, der Beschreibung und den Figuren.

Die Erfindung löst die Aufgabe durch eine Rundläuferpresse gemäß Anspruch 1 und ein Verfahren gemäß Anspruch 9.

Die erfindungsgemäße Rundläuferpresse, bei der die Abstreifeinrichtung zum Einsatz kommt, kann im Grundsatz in an sich bekannter Weise ausgestaltet sein. Sie umfasst in der Regel eine sogenannte Matrizenscheibe mit mehreren Aufnahmen, in denen das zu verpressende Material verpresst wird. Die Aufnahmen können sogenannte Matrizenbohrungen sein. In den Matrizenbohrungen können Matrizenbuchsen angeordnet sein. Dies ist aber nicht zwingend erforderlich, sondern die Pressstempel können auch unmittelbar mit den Matrizenbohrungen zusammenwirken. Die Matrizenscheibe kann im Übrigen einstückig ausgebildet sein oder aus Matrizensegmenten bestehen. Bei den mit der Rundläuferpresse hergestellten Presslingen kann es sich um Tabletten handeln. Das zu verpressende Material kann pulverförmig sein. Auch die Funktion eines Abstreifelements ist an sich bekannt. Insbesondere werden durch ein solches Abstreifelement üblicherweise mittels der Unterstempel auf die Matrizenscheibenoberseite geförderte Tabletten einem Ausgang der Rundläuferpresse zugeführt. Von dort können sie beispielsweise in einen Ablaufkanal für ordnungsgemäß produzierte Tabletten gelangen. Das Abstreifelement der erfindungsgemäßen Rundläuferpresse kann eine Aussortiereinheit für Schlechttabletten aufweisen, die den Qualitätsanforderungen nicht genügen. Eine solche Aussortiereinheit kann insbesondere eine Aussortierdüse umfassen, mittels der gerichtete Druckluft gegen auszusortierende Presslinge geblasen wird, so dass diese Presslinge in einen Schlechtkanal gefördert werden. Das Abstreifelement der erfindungsgemäßen Rundläuferpresse kann eine Sichelform bzw. eine sichelförmige Abstreiffläche besitzen und oberhalb der Matrizenscheibe angeordnet sein.

Das Abstreifelement der erfindungsgemäßen Rundläuferpresse weist im Unterschied zum Stand der Technik eine Identifikations- und/oder Positioniereinheit auf, die Identifikations-und/oder Positionierdaten enthält und insbesondere fest mit dem Abstreifelement verbunden sein kann. Die Identifikations- und/oder Positionierdaten erlauben eine eindeutige Identifizierung und/oder Ermittlung einer vorbestimmten und/oder tatsächlichen Position des jeweiligen Abstreifelements. Bei der Identifikations-und/oder Positioniereinheit kann es sich beispielsweise um einen codierten Chip oder Ähnliches handeln. Mittels der Lese- und/oder Schreibeinheit, insbesondere eines Lese- und/oder Schreibgeräts, werden die Identifikations- und/oder Positionierdaten aus der Identifikations- und/oder Positioniereinheit ausgelesen. Von der Lese- und/oder Schreibeinheit können auch Identifikations- und/oder Positionierdaten in die Identifikations- und/oder Positioniereinheit geschrieben werden. Aufgrund der ausgelesenen Daten liegt eine eindeutige Identifikation und/oder Ermittlung einer vorbestimmten und/oder tatsächlichen Position des Abstreifelements vor, die beim Betrieb der Presse berücksichtigt werden kann. Insbesondere ist eine Überprüfung möglich, ob das jeweils eingesetzte Abstreifelement das richtige Abstreifelement für die jeweils zu produzierenden Presslinge ist und/oder ob das Abstreifelement korrekt positioniert ist. Eine Beschädigung von Presslingen aufgrund eines falschen oder falsch positionierten Abstreifelements oder eine mangelhafte Aussortierung von Schlechttabletten kann somit vermieden werden. Die Lese- und/oder Schreibeinheit kann Teil einer Maschinensteuerung der Rundläuferpresse sein.

Das mindestens eine Abstreifelement kann eine vorbestimmte ortsfeste Position über der Matrizenscheibe besitzen bzw. in einer vorbestimmten ortsfesten Position über der Matrizenscheibe angeordnet werden. Es besteht dann insbesondere für jedes Abstreifelement eine fest vorgegebene Positionierung, in der das jeweilige Abstreifelement insbesondere spielfrei gehalten werden kann. Eine Fehlpositionierung von Abstreifelementen kann auf diese Weise sicher vermieden werden. Auch eine gegebenenfalls vorgesehene Aussortierdüse ist bei dieser Ausgestaltung jederzeit optimal auf die Presslinge ausgerichtet.

Zwischen der Identifikations- und/oder Positioniereinheit und der Lese- und/oder Schreibeinheit ist grundsätzlich eine drahtgebundene Kommunikation möglich. Nach einer besonders praxisgemäßen Ausgestaltung kann allerdings vorgesehen sein, dass die mindestens eine Identifikations- und/oder Positioniereinheit mindestens eine Sende- und/oder Empfangseinheit umfasst und, dass die Lese-und/oder Schreibeinheit ebenfalls eine Sende- und/oder Empfangseinheit umfasst, mit der die Lese- und/oder Schreibeinheit zum Auslesen der Identifikations-und/oder Positionierdaten drahtlos mit der mindestens einen Sende- und/oder Empfangseinheit der mindestens einen Identifikations- und/oder Positioniereinheit kommuniziert. Das Auslesen der Identifikations- und/oder Positionierdaten kann also drahtlos erfolgen. Hierzu sind grundsätzlich an sich bekannte Kommunikationswege denkbar, beispielsweise Funk, Infrarot, Bluetooth etc.

Nach einer weiteren Ausgestaltung können die ausgelesenen Identifikations-und/oder Positionierdaten mit Produktionsparametern der Rundläuferpresse, insbesondere Produktionsparametern betreffend einen mit der Rundläuferpresse herzustellenden Presslingtyp, abgeglichen werden. Der Abgleich kann mittels der Lese- und/oder Schreibeinheit erfolgen. Es ist jedoch auch denkbar, dass der Abgleich durch eine Steuereinrichtung der Rundläuferpresse erfolgt. Auch kann die Lese- und/oder Schreibeinheit in die Maschinensteuerung integriert sein. Es erfolgt bei dieser Ausgestaltung also ein automatischer Abgleich zwischen dem anhand der Identifikations- und/oder Positionierdaten eindeutig identifizierten Abstreifelement und dem jeweils herzustellenden Presslingtyp. Beispielsweise kann auf diese Weise automatisiert festgestellt werden, ob das jeweils eingesetzte Abstreifelement zu der Größe des herzustellenden Presslings passt, oder ob das Abstreifelement korrekt positioniert ist. Die erforderliche Größe und/oder Positionierung des jeweiligen Abstreifelements kann dabei in den Produktionsparametern abgelegt sein. Falls der Abgleich zwischen den Produktionsparametern und den Identifikations- und/oder Positionierdaten eine unzulässige Abweichung ergibt, kann eine Warnmeldung und/oder ein Steuersignal ausgegeben werden. Dies kann ebenfalls durch die Lese-und/oder Schreibeinheit oder auch eine Steuereinrichtung der Rundläuferpresse erfolgen. Aufgrund der Warnmeldung kann eine Bedienperson das Abstreifelement entfernen und gegen das richtige Abstreifelement austauschen. Die Warnmeldung kann ein optisches und/oder akustisches Signal umfassen. Das Steuersignal kann ein elektrisches Signal sein. Es kann zur automatischen Beeinflussung des Betriebsablaufs der Rundläuferpresse ausgebildet sein.

Die Lese- und/oder Schreibeinheit kann dazu ausgebildet sein, die ausgelesenen Identifikations- und/oder Positionierdaten mit in einer Steuereinrichtung der Rundläuferpresse hinterlegten Produktionsparametern abzugleichen. Hierzu kann die Lese- und/oder Schreibeinheit mit der Steuereinrichtung kommunizieren. Diese Kommunikation kann wiederum drahtlos oder drahtgebunden erfolgen, wobei bei einer drahtlosen Kommunikation wiederum die oben erläuterten an sich bekannten Verfahren Funk, Infrarot, Bluetooth, etc. denkbar sind. Wie erläutert, kann sowohl die Lese- und/oder Schreibeinheit als auch die Steuereinrichtung dazu ausgebildet sein, gegebenenfalls eine Warnmeldung und/oder ein Steuersignal der vorgegebenen Art auszugeben. Die Lese- und/oder Schreibeinheit kann dabei lediglich zum Auslesen der Identifikations- und/oder Positionierdaten aus der Identifikations-und/oder Positioniereinheit des Abstreifelements und zur Weiterleitung dieser Daten an die Steuereinrichtung dienen. Selbstverständlich ist es auch denkbar, dass die Lese- und/oder Schreibeinheit in die Steuereinrichtung der Rundläuferpresse integriert ist.

Die Identifikations- und/oder Positioniereinheit umfasst erfindungsgemäß mindestens einen Positionssensor, der die Position des mindestens einen Abstreifelements über der Matrizenscheibe erfasst. Es ist also eine automatische Erkennung der tatsächlichen Position des jeweiligen Abstreifelements möglich. Auf dieser Grundlage kann dann der Abgleich mit einer zu einer bestimmten Betriebsart der Rundläuferpresse hinterlegten Sollposition erfolgen. Es kann dann gegebenenfalls eine Korrektur der Position des Abstreifelements erfolgen. Dabei kann ein Abstreifer für sämtliche Presslingtypen verwendet werden. Weiterhin sind Positioniermittel vorgesehen, mit denen das mindestens eine Abstreifelement abhängig von einer durch den mindestens einen Positionssensor erfassten Position automatisch in eine vorgegebene Position über der Matrizenscheibe gebracht werden kann. Die Positioniermittel können geeignete Verstellantriebe umfassen. Es erfolgt also eine automatische Überprüfung und gegebenenfalls Korrektur des jeweiligen Abstreifelements, abhängig von dem beispielsweise durch eine Bedienperson vorgegebenen Presslingtyp.

Es ist auch möglich, dass die Abstreifeinrichtung der erfindungsgemäßen Rundläuferpresse eine Mehrzahl unterschiedlicher Abstreifelemente umfasst. Die unterschiedlichen Abstreifelemente können sich hinsichtlich ihrer Größe und/oder einer vorgegebenen Positionierung über der Matrizenscheibe unterscheiden. So können die Abstreifelemente jeweils eine in Bezug zu einer Kreisbahn, auf der sich für die Presslinge vorgesehene Aufnahmen der Matrizenscheibe befinden, vorbestimmte unterschiedliche radiale Positionierung besitzen. Eine unterschiedliche Positionierung bezieht sich dabei insbesondere auf eine unterschiedliche Positionierung der Abstreifflächen der Abstreifelemente. Die Abstreifelemente können auch an die jeweilige Form und/oder an eine in der Ebene der Matrizenscheibe gemessene charakteristische Abmessung des Presslings angepasst sein. Insbesondere kann für die mit der Rundläuferpresse herzustellenden Presslinge, beispielsweise Presslinge unterschiedlicher Größe bzw. unterschiedlichen Durchmessers, jeweils ein individuelles Abstreifelement vorgesehen sein. Für jedes dieser Abstreifelemente kann dann eine fest vorgegebene Position vorgesehen sein.

Das erfindungsgemäße Verfahren kann mit der erfindungsgemäßen Rundläuferpresse durchgeführt werden. Entsprechend kann die erfindungsgemäße Rundläuferpresse zur Durchführung des erfindungsgemäßen Verfahrens geeignet sein.

Ein Ausführungsbeispiel der Erfindung wird nachfolgend anhand von Figuren näher erläutert. Es zeigen schematisch:
- Fig. 1: ein Teil einer Rundläuferpresse für Tabletten in einer in die Zeichnungsebene abgewickelten Darstellung,
- Fig. 2: ausschnittsweise eine Abstreifeinrichtung nach dem Stand der Technik in einer Draufsicht,
- Fig. 3: ausschnittsweise eine Abstreifeinrichtung der erfindungsgemäßen Rundläuferpresse in einer Draufsicht, und
- Fig. 4: eine Abstreifeinrichtung der erfindungsgemäßen Rundläuferpresse in einer Ansicht in die in Fig. 3 mit Z gekennzeichnete Blickrichtung.

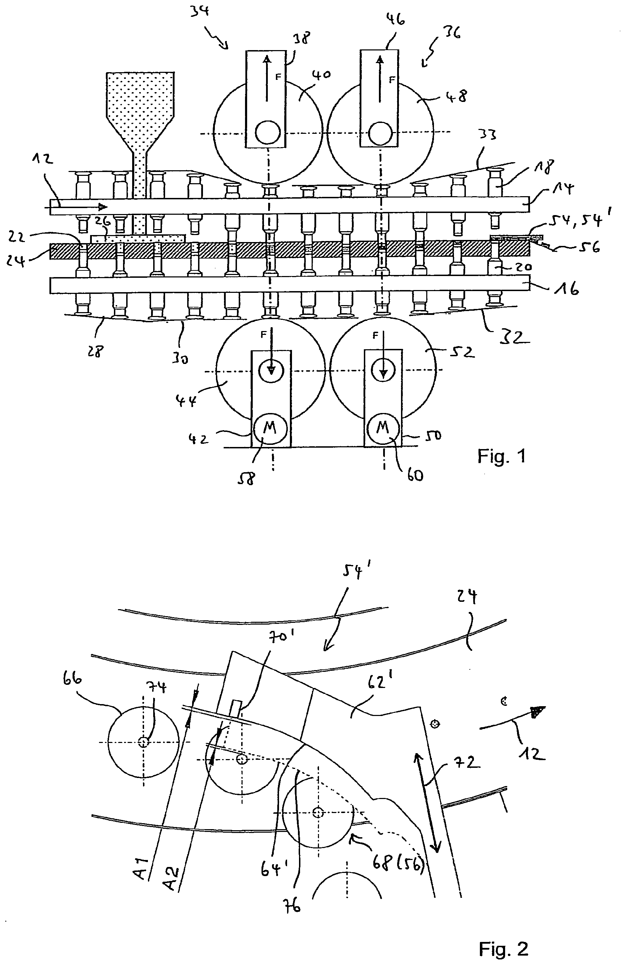

Soweit nichts anderes angegeben ist, bezeichnen gleiche Bezugszeichen gleiche Gegenstände. Fig. 1 zeigt den Aufbau einer an sich bekannten Rundläufertablettenpresse. Es ist der Rotor der Rundläufertablettenpresse dargestellt, der von einem nicht dargestellten Drehantrieb um eine in der Regel vertikale Achse rotiert wird, wie durch den Pfeil 12 (Drehrichtung) veranschaulicht. Der Rotor besitzt eine obere Stempelführung 14 und eine untere Stempelführung 16 zur Aufnahme von Oberstempeln 18 und Unterstempeln 20. Die Oberstempel 18 und Unterstempel 20 wirken mit Aufnahmen 22 einer Matrizenscheibe 24 zusammen, die zwischen den Stempelführungen 14, 16 angeordnet ist. Über eine Fülleinrichtung 26 wird den Aufnahmen 22 pulverförmiges Pressmaterial zugeführt. Die Fülleinrichtung 26 ist Teil einer Füll- und Dosierstation der Presse, die weiterhin Füllkurvenelemente 28 und Dosierkurvenelemente 30 umfasst. Der Rotor umfasst weiterhin obere Aufzugskurvenelemente 33 und untere Ausstoßkurvenelemente 32 einer Auswerferstation, die eine Abstreifeinrichtung 54, 54' aufnimmt.

In Drehrichtung 12 des Rotors der Fülleinrichtung 26 nachgeordnet befindet sich eine Vordruckstation 34 und eine Hauptdruckstation 36. Die Vordruckstation 34 besitzt eine obere Druckeinrichtung 38 mit einer oberen Druckrolle 40 und eine untere Druckeinrichtung 42 mit einer unteren Druckrolle 44. Die Hauptdruckstation 36 umfasst ebenfalls eine obere Druckeinrichtung 46 mit einer oberen Druckrolle 48 und eine untere Druckeinrichtung 50 mit einer unteren Druckrolle 52. Die Ober- und Unterstempel 18, 20 wirken mit den Druckrollen 40, 44, 48, 52 in an sich bekannter Weise zusammen, um das in die Aufnahmen 22 gefüllte Pressmaterial zu Presslingen, insbesondere Tabletten, zu verpressen. Die unteren Druckeinrichtungen 42, 50 umfassen jeweils einen motorischen Antrieb 58, 60, mit dem der vertikale Abstand zwischen den oberen Druckrollen 40, 48 und den unteren Druckrollen 44, 52 variiert werden kann. Wie in Fig. 1 durch die mit F gekennzeichneten Pfeile veranschaulicht, wirken im Betrieb der Presse zwischen den Ober- bzw. Unterstempeln 18, 20 und den Druckrollen 40, 44, 48, 52 bzw. den diese tragenden Druckeinrichtungen 38, 42, 46, 50 Kräfte. Zur Messung dieser Kräfte F sind in zumindest einigen, vorzugsweise sämtlichen Druckeinrichtungen 38, 42, 46, 50 Kraftmesseinrichtungen angeordnet.

In Drehrichtung 12 der Vor- und Hauptdruckstation 34, 36 nachgeordnet befindet sich eine Abstreifeinrichtung 54, 54', die zu diesem Zeitpunkt von den Unterstempeln 20 auf die Oberfläche der Matrizenscheibe 24 geschobene Tabletten in an sich bekannter Weise einem Tablettenablauf 56 zuführt.

Fig. 2 zeigt eine Abstreifeinrichtung 54' nach dem Stand der Technik in einer Draufsicht. Zu erkennen ist ein Abstreifelement 62', welches oberhalb der in Fig. 2 ausschnittsweise zu erkennenden Matrizenscheibe 24 angeordnet ist. In Fig. 2 dreht sich die Matrizenscheibe 24 im Betrieb gegen den Uhrzeigersinn, wie durch den Pfeil 12 veranschaulicht. Das Abstreifelement 62' besitzt eine im Wesentlichen sichelförmige Abstreiffläche 64'. Mit der Rundläuferpresse hergestellte und in der Position in Fig. 2 von den Unterstempeln 20 auf die Oberseite der Matrizenscheibe 24 geförderte Tabletten 66 gelangen mit der Drehrichtung 12 der Matrizenscheibe 24 in Kontakt mit der sichelförmigen Abstreiffläche 64' des Abstreifelements 62' und werden von diesem einem Ausgang 68 zugeführt, der beispielsweise zu einem Ablaufkanal des Tablettenablaufs 56 für ordnungsgemäß hergestellte Tabletten führen kann. Das Abstreifelement 62' besitzt außerdem eine Aussortierdüse 70'. Diese führt mittels gerichteter Druckluft im Rahmen einer Qualitätskontrolle für schlecht befundene Tabletten 66 einem Schlechtkanal zu. Das Abstreifelement 62' nach dem Stand der Technik ist stufenlos in radialer Richtung verstellbar, wie durch den Pfeil 72 in Fig. 2 angedeutet. Sollen beispielsweise anstelle der in Fig. 2 gezeigten Tabletten 66 im Durchmesser erheblich kleinere Tabletten abgestreift werden, wie sie in Fig. 2 gestrichelt bei dem Bezugszeichen 74 dargestellt sind, muss das Abstreifelement 62' in radialer Richtung nach außen in die bei dem Bezugszeichen 76 gestrichelt dargestellte Position verstellt werden. Das Abstreifelement 62' sollte abhängig von dem Tablettendurchmesser oder der Tablettenabmessung jeweils so eingestellt werden, dass ein fest definierter Abstand zwischen dem Beginn der sichelförmigen Abstreiffläche 64' und dem Umfang bzw. dem Rand der jeweiligen Tablette 66, 74 besteht. Die entsprechenden Abstände sind in Fig. 2 als A1 und A2 gekennzeichnet. Wie eingangs erläutert, besteht bei dieser bekannten Abstreifeinrichtung 54' die Gefahr einer Beschädigung der abzustreifenden Tabletten 66, 74 sowie die Gefahr einer mangelhaften Aussortierung von Schlechttabletten.

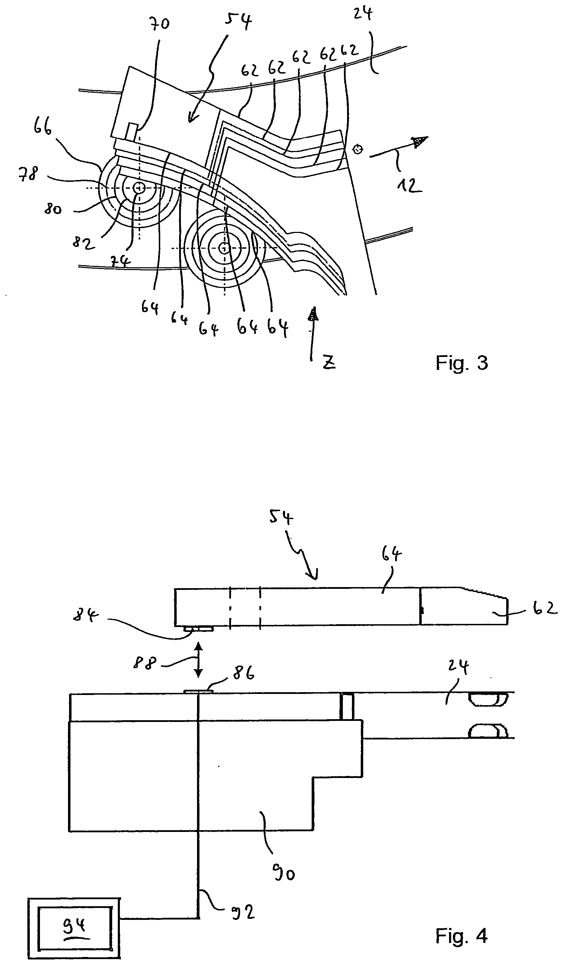

In Fig. 3 ist eine Abstreifeinrichtung 54 der erfindungsgemäßen Rundläuferpresse in der Draufsicht gezeigt. Auch in Fig. 3 dreht sich die Matrizenscheibe 24 im Betrieb gegen den Uhrzeigersinn, wie durch den Pfeil 12 veranschaulicht. Die Abstreifeinrichtung 54 der erfindungsgemäßen Rundläuferpresse umfasst eine Mehrzahl von Abstreifelementen 62, die in Fig. 3 aus Gründen der Veranschaulichung sämtlich dargestellt sind. Selbstverständlich wird im Betrieb jeweils nur ein Abstreifelement 62 zurzeit verwendet. Jedes der Abstreifelemente 62 besitzt wiederum eine sichelförmige Abstreiffläche 64. Außerdem besitzt jedes der Abstreifelemente 62 wiederum eine Aussortierdüse 70, wobei aus Gründen der Einfachheit in Fig. 3 diese nur für eines der Abstreifelemente 62 dargestellt ist. Wie in Fig. 3 zu erkennen, unterscheiden sich die Abstreifelemente 62 hinsichtlich ihrer Größe. Dabei sind die sichelförmigen Abstreifflächen 64 in unterschiedlichen radialen Positionen entlang der Matrizenscheibe 24 angeordnet. Insbesondere besitzen sie jeweils eine in Bezug zu der Kreisbahn, auf der sich die Aufnahmen 22 der Matrizenscheibe 24 befinden, eine vorbestimmte unterschiedliche radiale Positionierung. Jedes der Abstreifelemente 62 besitzt dabei eine fest vorgegebene Position über der Matrizenscheibe 24, in der es spielfrei und nicht verstellbar gehalten ist. In Fig. 3 sind darüber hinaus zur Veranschaulichung mit einer erfindungsgemäßen Rundläuferpresse herzustellende Tabletten 66, 74, 78, 80, 82 dargestellt. Es versteht sich wiederum, dass im Betrieb selbstverständlich jeweils nur eine Tablettengröße zurzeit produziert und auf die Matrizenscheibe 24 gefördert wird. In Fig. 3 ist zu erkennen, dass für jeden Tablettendurchmesser genau ein geeignetes Abstreifelement 62 vorgesehen ist. Hierdurch ist auch sichergestellt, dass die Aussortierdüse 70 jederzeit korrekt zu den Tabletten 66, 74, 78, 80, 82 ausgerichtet ist.

In Fig. 4 ist äußerst schematisch die Abstreifeinrichtung 54 aus Fig. 3 in einer Vorderansicht gezeigt, die sich in einer in Fig. 3 mit "Z" gekennzeichnete Blickrichtung ergibt. Es ist zu erkennen, dass das dort dargestellte Abstreifelement 62 eine fest mit diesem verbundene Identifikations- und/oder Positioniereinheit 84 aufweist. Es versteht sich, dass jedes der in Fig. 3 gezeigten Abstreifelemente 62 eine solche Identifikations- und/oder Positioniereinheit 84 besitzt. Jede Identifikations- und/oder Positioniereinheit 84 enthält Identifikations- und/oder Positionierdaten, anhand derer das jeweilige Abstreifelement 62 eindeutig identifizierbar ist. Die Abstreifeinrichtung 54 der erfindungsgemäßen Rundläuferpresse umfasst weiterhin eine bei dem Bezugszeichen 86 gezeigte Lese- und/oder Schreibeinheit. Diese liest über eine bei dem Bezugszeichen 88 veranschaulichte drahtlose Kommunikationsverbindung die Identifikations- und/oder Positionierdaten des jeweils über der Matrizenscheibe 24 positionierten Abstreifelements 62 aus. Für die drahtlose Kommunikation, die bidirektional erfolgen kann, besitzen die Identifikations-und/oder Positioniereinheit 84 und die Lese- und/oder Schreibeinheit 86 jeweils eine nicht näher dargestellte Sende- und Empfangseinheit. Die Lese- und/oder Schreibeinheit 86 kann beispielsweise auf einer Säule 90 der Abstreifeinrichtung 54 angeordnet sein. In dem dargestellten Beispiel leitet die Lese- und/oder Schreibeinheit 86 die ausgelesenen Identifikations- und/oder Positionierdaten über eine drahtgebundene Verbindung 92 an eine Steuereinrichtung 94 der erfindungsgemäßen Rundläuferpresse weiter. Die Steuereinrichtung 94 führt einen Abgleich durch zwischen den Identifikations- und/oder Positionierdaten des jeweils eingesetzten Abstreifelements 62 und zugehörigen Produktionsparametern der Rundläuferpresse. Bei diesen Produktionsparametern handelt es sich insbesondere um Angaben hinsichtlich des Durchmessers bzw. der charakteristischen Abmessung der jeweils herzustellenden Tabletten 66, 74, 78, 80, 82. Für jeden herzustellenden Tablettendurchmesser bzw. für jede herzustellende charakteristische Tablettenabmessung sind in der Steuereinrichtung die Identifikations- und/oder Positionierdaten des korrekten Abstreifelements 62, also des Abstreifelements 62 passender Größe, hinterlegt. Die Steuereinrichtung 94 führt einen Abgleich zwischen den für den jeweiligen Tablettendurchmesser bzw. die jeweiligen Tablettenabmessungen hinterlegten Soll-Identifikations- und/oder Positionierdaten und den von der Lese-und/oder Schreibeinheit 86 ausgelesenen Identifikations- und/oder Positionierdaten durch. Sofern die ausgelesenen Identifikations- und/oder Positionierdaten nicht den Soll-Identifikationsdaten entsprechen, wird von der Steuereinrichtung 94 ein Warnsignal für eine Bedienperson und/oder ein Steuersignal der vorgenannten Art ausgegeben.

Die Identifikations- und/oder Positioniereinheit umfasst einen oder mehrere Positionssensoren, der bzw. die die Position des mindestens einen Abstreifelements 62 über der Matrizenscheibe 24 erfassen. Die erfasste Position kann in die Identifikations- und/oder Positionierdaten der Identifikations- und/oder Positioniereinheit 84 abgelegt werden. Es kann beispielsweise von der Lese- und/oder Schreibeinheit 86 oder der Steuereinrichtung 94 ein Vergleich der erfassten Position mit einer in den Produktionsparametern abgelegten Sollposition erfolgen. Wird hier eine unzulässige Abweichung festgestellt, kann wiederum ein Warn- und/oder Steuersignal der vorgenannten Art ausgegeben werden. Weiterhin sind Positioniermittel vorgesehen, beispielsweise Verstellantriebe, mit denen das Abstreifelement 62 auf dieser Grundlage automatisch in die vorgegebene Position über der Matrizenscheibe gebracht wird.

Die erfindungsgemäße Rundläuferpresse und das erfindungsgemäße Verfahren zum Betreiben der Rundläuferpresse stellen sicher, dass jedes Abstreifelement 62 korrekt positioniert ist. Gleichzeitig wird erfindungsgemäß überprüft, ob das jeweils eingesetzte Abstreifelement 62 zu der herzustellenden Tablettenart passt. Ist dies nicht der Fall, wird eine Warnmeldung an eine Bedienperson und/oder ein Steuersignal der vorgenannten Art ausgegeben, so dass geeignete Gegenmaßnahmen getroffen werden können.

## Patentansprüche

1. Rundläuferpresse mit einer Steuereinrichtung und mit einem Rotor, wobei der Rotor eine obere und eine untere Stempelführung (14, 16) für obere und untere Pressstempel (18, 20) und eine Matrizenschreibe (24) zwischen den Stempelführungen (14, 16) aufweist, wobei die Pressstempel (18, 20) mit Aufnahmen (22) der Matrizenscheibe (24) zusammenwirken, ferner mit mindestens einer Füll- und Dosierstation, in der zu verpressendes Material in die Aufnahmen (22) gefüllt wird, weiterhin mit mindestens einer Druckstation (34, 36), die im Betrieb mit den oberen Pressstempeln (18) und mit den unteren Pressstempeln (20) zusammenwirkt, so dass diese in den Aufnahmen (22) befindliches Material zu Presslingen (66) verpressen, und mit mindestens einer Auswerferstation, in der die Presslinge (66) aus den Aufnahmen (22) auf die Matrizenscheibe (24) gefördert werden, wobei die Rundläuferpresse mindestens eine Abstreifeinrichtung (54) umfasst mit mindestens einem Abstreifelement (62) zum Abstreifen von auf der Matrizenscheibe (24) befindlichen Presslingen (66) zu einem Ausgang (68), **dadurch gekennzeichnet, dass** das mindestens eine Abstreifelement (62) mindestens eine Identifikations- und/oder Positioniereinheit (84) mit Identifikations-und/oder Positionierdaten betreffend das mindestens eine Abstreifelement (62) aufweist, und dass die Abstreifeinrichtung weiterhin eine Lese- und/oder Schreibeinheit (86) umfasst, die dazu ausgebildet ist, mit der mindestens einen Identifikations- und/oder Positioniereinheit (84) zu kommunizieren, um die Identifikations- und/oder Positionierdaten aus der mindestens einen Identifikations- und/oder Positioniereinheit (84) auszulesen, wobei die Identifikations- und/oder Positioniereinheit (84) mindestens einen Positionssensor umfasst, der die Position des mindestens einen Abstreifelements (62) über der Matrizenscheibe (24) erfasst. und wobei die Abstreifeinrichtung weiterhin Positioniermittel umfasst. mit denen das mindestens eine Abstreifelement (62) abhängig von einer durch den mindestens einen Positionssensor erfassten Position automatisch in eine vorgegebene Position über der Matrizenscheibe (24) gebracht werden kann.

2. Rundläuferpresse nach Anspruch 1, **dadurch gekennzeichnet, dass** die mindestens eine Identifikations- und/oder Positioniereinheit (84) mindestens eine Sende- und/oder Empfangseinheit umfasst und, dass die Lese- und/oder Schreibeinheit (86) ebenfalls eine Sende-und/oder Empfangseinheit umfasst, mit der die Lese- und/oder Schreibeinheit (86) zum Auslesen der Identifikations- und/oder Positionierdaten drahtlos mit der mindestens einen Sende- und/oder Empfangseinheit der mindestens einen Identifikations- und/oder Positioniereinheit (84) kommuniziert.

3. Rundläuferoresse nach einem der vorhergehenden Ansprüche, **dadurch gekennzeichnet, dass** die Lese- und/oder Schreibeinheit (86) weiterhin dazu ausgebildet ist, die Identifikations- und/oder Positionierdaten mit Produktionsparametern, insbesondere Produktionsparametern betreffend einen herzustellenden Presslingtyp, abzugleichen.

4. Rundläuferpresse nach Anspruch 3, **dadurch gekennzeichnet, dass** die Lese- und/oder Schreibeinheit (86) dazu ausgebildet ist, eine Warnmeldung und/oder ein Steuersignal auszugeben, falls der Abgleich zwischen den Produktionsparametern und den Identifikations-und/oder Positionierdaten eine unzulässige Abweichung ergibt.

5. Rundläuferpresse nach Anspruch 4, **dadurch gekennzeichnet, dass** die Warnmeldung ein optisches und/oder akustisches Signal umfasst.

6. Rundläuferoresse nach einem der Ansprüche 4 oder 5, **dadurch gekennzeichnet, dass** das Steuersignal zur automatischen Beeinflussung des Betriebsablaufs der Rundläuferpresse ausgebildet ist.

7. Rundläuferpresse nach einem der vorhergehenden Ansprüche, **dadurch gekennzeichnet, dass** sie eine Mehrzahl Abstreifelemente (62) umfasst, die sich hinsichtlich ihrer Größe und/oder einer vorgegebenen Positionierung über der Matrizenscheibe (24) unterscheiden.

8. Rundläuferpresse nach Anspruch 7, **dadurch gekennzeichnet, dass** die unterschiedlichen Abstreifelemente (62) jeweils eine in Bezug zu einer Kreisbahn, auf der sich für die Presslinge (66) vorgesehene Aufnahmen (22) der Matrizenscheibe (24) befinden, vorbestimmte unterschiedliche radiale Positionierung besitzen.

9. Verfahren zum Betreiben einer Rundläuferpresse, bei dem in Aufnahmen (22) einer Matrizenscheibe (24) gefülltes Material von Ober- und Unterstempeln (18, 20) zu Presslingen (66) verpresst wird und die Presslinge (66) anschließend auf die Matrizenscheibe (24) gefördert und von einem Abstreifelement (62) von der Matrizenscheibe (24) zu einem Ausgang (68) abgestreift werden, **gekennzeichnet durch** die Schritte:
- das Abstreifelement (62) wird über der Matrizenscheibe (24) angeordnet,
- mittels einer Lese- und/oder Schreibeinheit (86) werden Identifikations-und/oder Positionierdaten betreffend das Abstreifelement (62) aus einer Identifikations- und/oder Positioniereinheit (84) des Abstreifelements (62) ausgelesen.
- wobei die Identifikations- und/oder Positioniereinheit (84) mindestens einen Positionssensor umfasst, mit dem die Position des mindestens einen Abstreifelements (62) über der Matrizenscheibe (24) erfasst wird, wobei das mindestens eine Abstreifelement (62) abhängig von einer durch den mindestens einen Positionssensor erfassten Position automatisch in eine vorgegebene Position über der Matrizenscheibe (24) gebracht wird.

10. Verfahren nach Anspruch 9, **dadurch gekennzeichnet, dass** das Auslesen der Identifikations- und/oder Positionierdaten drahtlos erfolgt.

11. Verfahren nach einem der Ansprüche 9 oder 10, **dadurch gekennzeichnet, dass** die ausgelesenen Identifikations- und/oder Positionierdaten mit Produktionsparametern der Rundläuferpresse, insbesondere Produktionsparametern betreffend einen mit der Rundläuferpresse herzustellenden Presslingtyp, abgeglichen werden.*

12. Verfahren nach Anspruch 11, **dadurch gekennzeichnet, dass** eine Warnmeldung und/oder ein Steuersignal ausgegeben wird, falls der Abgleich zwischen den Produktionsparametern und den Identifikations- und/oder Positionierdaten eine unzulässige Abweichung ergibt.

13. Verfahren nach Anspruch 12, **dadurch gekennzeichnet, dass** die Warnmeldung in Form eines optischen und/oder akustischen Signals ausgegeben wird.

14. Verfahren nach einem der Ansprüche 12 oder 13, **dadurch gekennzeichnet, dass** das Steuersignal zur automatischen Beeinflussung des Betriebsablaufs der Rundläuferpresse dient.

15. Verfahren nach einem der Ansprüche 9 bis 14, **dadurch gekennzeichnet, dass** es mit einer Rundläuferpresse nach einem der Ansprüche 1 bis 8 durchgeführt wird.

## Claims

1. A rotary press comprising a control apparatus and a rotor, wherein the rotor has an upper and a lower punch guide (14, 16) for upper and lower press punches (18, 20), and a die plate (24) between the punch guides (14, 16), wherein the press punches (18, 20) interact with openings (22) in the die plate (24), furthermore comprising at least one filling and dosing station in which material to be pressed is added to the openings (22), furthermore comprising at least one pressing station (34, 36) that, during operation, interacts with the upper press punches (18) and the lower press punches (20) such that they press the material located in the openings (22) into pellets (66), and comprising at least one ejector station in which the pellets (66) are conveyed out of the openings (22) onto the die plate (24), wherein the rotary press comprises at least one scraping apparatus (54) with at least one scraping element for scraping off pellets (66) located on the die plate (24) to an outlet (68), **characterized in that** the at least one scraping element (62) has at least one identification and/or position unit (84) having identification and/or position data relating to the at least one scraping element (62), and the scraping apparatus further comprises a read and/or write unit (86) which is designed to communicate with the at least one identification and/or position unit (84) in order to read out the identification and/or position data from the at least one identification and/or position unit (84), wherein the identification and/or position unit (84) comprises at least one position sensor that detects the position of the at least one scraping element (62) above the die plate (24), and wherein the scraping apparatus furthermore comprises positioning means by which the at least one scraping element (62) can be automatically brought into a predetermined position above the die plate (24) depending on a position detected by the at least one position sensor.

2. The rotary press according to claim 1, **characterized in that** the at least one identification and/or position unit (84) comprises at least one transmitting and/or receiving unit, and the read and/or write unit (86) also comprises a transmitting and/or receiving unit by means of which the read and/or write unit (86) for reading out the identification and/or position data wirelessly communicates with the at least one transmitting and/or receiving unit of the at least one identification and/or position unit (84).

3. The rotary press according to one of the preceding claims, **characterized in that** the read and/or write unit (86) is further designed to match the identification and/or position data with production parameters, especially production parameters relating to a pellet type to be produced.

4. The rotary press according to claim 3, **characterized in that** the read and/or write unit (86) is designed to output a warning message and/or a control signal if the comparison of the production parameters with the identification and/or position data yields an impermissible deviation.

5. The rotary press according to claim 4, **characterized in that** the warning message comprises a visual and/or acoustic signal.

6. The rotary press according to one of claims 4 or 5, **characterized in that** the control signal is designed to automatically influence the operating process of the rotary press.

7. The rotary press according to one of the preceding claims, **characterized in that** it comprises a plurality of scraping elements (62) that differ in terms of their size and/or a predetermined position above the die plate (24).

8. The rotary press according to claim 7, **characterized in that** the different scraping elements (62) each have a specific different radial position relative to a circular path along which the openings (22) provided for the pellets (66) are located in the die plate (24).

9. A method for operating a rotary press in which material added to the openings (22) of a die plate (24) is pressed by upper and lower punches (18, 20) into pellets (66), and the pellets (66) are then conveyed onto the die plate (24) and scraped off of the die plate (24) by a scraping element (62) to an outlet (68), **characterized by** these steps:
- the scraping element (62) is arranged above the die plate (24),
- identification and/or position data relating to the scraping element (62) are read out of an identification and/or position unit (84) of the scraping element (62) by means of a read and/or write unit (86),
- wherein the identification and/or position unit (84) comprises at least one position sensor that detects the position of the at least one scraping element (62) above the die plate (24), wherein the at least one scraping element (62) is automatically brought into a predetermined position above the die plate (24) depending on a position detected by the at least one position sensor.

10. The method according to claim 9, **characterized in that** the identification and/or positioning data are read out wirelessly.

11. The method according to one of claims 9 or 10, **characterized in that** the read-out identification and/or positioning data are compared with production parameters of the rotary press, in particular production parameters relating to a pellet type to be produced by the rotary press.

12. The method according to claim 11, **characterized in that** a warning message and/or a control signal is output if the comparison of the production parameters with the identification and/or positioning data yields an impermissible deviation.

13. The method according to claim 12, **characterized in that** the warning message is output in the form of a visual and/or acoustic signal.

14. The method according to one of claims 12 or 13, **characterized in that** the control signal serves to automatically influence the operating process of the rotary press.

15. The method according to one of claims 9 to 14, **characterized in that** the method is performed using a rotary press according to one of claims 1 to 8.

## Revendications

1. Presse à plateau tournant, dotée d'un dispositif de commande et d'un rotor, dans laquelle le rotor présente un guide de poinçon supérieur et un guide de poinçon inférieur (14, 16) destinés à des poinçons de compression supérieurs et inférieurs (18, 20) et une filière de matriçage (24) entre les guides de poinçon (14, 16), dans laquelle les poinçons de compression (18, 20) interagissent avec des logements (22) de la filière de matriçage (24), en plus avec au moins un poste de dosage et de remplissage, dans lequel le matériau à presser est rempli dans les logements (22), en outre avec au moins un poste de compression (34, 36), qui interagit en fonctionnement avec les poinçons de compression supérieurs (18) et les poinçons de compression inférieurs (20), si bien que ceux-ci compressent le matériau se trouvant dans les logements (22) sous la forme de pièces pressées (66), et avec au moins un poste d'éjection, dans lequel les pièces pressées (66) sont acheminées hors des logements (22) sur la filière de matriçage (24), dans lequel la presse à plateau tournant comporte au moins un dispositif de démoulage (54) avec au moins un élément de démoulage (62) pour démouler les pièces pressées (66) se trouvant sur la filière de matriçage (24) vers une sortie (68), **caractérisée en ce que** ledit élément de démoulage (62) au moins présente au moins une unité d'identification et/ou de positionnement (84) avec les données d'identification et/ou de positionnement relatives audit élément de démoulage (62) au moins et que le dispositif de démoulage comporte encore une unité d'écriture et/ou de lecture (86), qui est conçue de manière à communiquer avec au moins ladite unité d'identification et/ou de positionnement (84) pour lire les données d'identification et/ou de positionnement issues de ladite unité d'identification et/ou de positionnement au moins (84), dans laquelle l'unité d'identification et/ou de positionnement (84) comprend au moins un détecteur de position, qui capte la position dudit élément de démoulage (62) au moins au-dessus de la filière de matriçage (24), et dans laquelle le dispositif de démoulage comporte en plus des moyens de positionnement, avec lesquels ledit élément de démoulage (62) au moins peut être placé automatiquement dans une position prescrite au-dessus de la filière de matriçage (24) en fonction d'une position saisie par ledit détecteur de position au moins.

2. Presse à plateau tournant selon la revendication 1, **caractérisée en ce que** ladite unité d'identification et/ou de positionnement (84) au moins comprend au moins une unité d'émission et/ou de réception et que l'unité d'écriture et/ou de lecture (86) comporte également une unité d'émission et/ou de réception, au moyen de laquelle l'unité d'écriture et/ou de lecture (86) communique sans fil avec ladite unité d'émission et/ou de réception au moins de ladite unité d'identification et/ou de positionnement (84) au moins pour lire les données d'identification et/ou de positionnement.

3. Presse à plateau tournant selon l'une des revendications précédentes, **caractérisée en ce que** l'unité d'écriture et/ou de lecture (86) est conçue en plus de manière à recouper les données d'identification et/ou de positionnement avec les paramètres de production, notamment les paramètres de production concernant un type de pièce pressée à fabriquer.

4. Presse à plateau tournant selon la revendication 3, **caractérisée en ce que** l'unité d'écriture et/ou de lecture (86) est conçue de manière à émettre un message d'avertissement et/ou un signal de commande, au cas où le recoupement entre les paramètres de production et les données d'identification et/ou de positionnement aboutirait à un écart inadmissible.

5. Presse à plateau tournant selon la revendication 4, **caractérisée en ce que** le message d'avertissement comprend un signal optique et/ou acoustique.

6. Presse à plateau tournant selon l'une des revendications 4 ou 5, **caractérisée en ce que** le signal de commande est conçu pour influencer automatiquement le processus opérationnel de la presse à plateau tournant.

7. Presse à plateau tournant selon l'une des revendications précédentes, **caractérisée en ce qu'**elle comporte de multiples éléments de démoulage (62), qui se différencient par leur taille et/ou un positionnement prédéfini au-dessus de la filière de matriçage (24).

8. Presse à plateau tournant selon la revendication 7, **caractérisée en ce que** les divers éléments de démoulage (62) possèdent chacun un positionnement radial différent, prédéterminé en rapport avec une trajectoire circulaire, sur laquelle se trouvent les logements (22) de la filière de matriçage (24) prévus pour les pièces pressées (66).

9. Procédé permettant de faire fonctionner une presse à plateau tournant, dans lequel un matériau rempli dans les logements (22) d'une filière de matriçage (24) est comprimé par des poinçons de compression supérieurs et inférieurs (18, 20) sous la forme de pièces pressées (66), puis les pièces pressées (66) sont convoyées sur la filière de matriçage (24) et démoulées de la filière de matriçage (24) vers une sortie (68) par un élément de démoulage (62), **caractérisé par** les étapes :
- l'élément de démoulage (62) est disposé au-dessus de la filière de matriçage (24)
- les données d'identification et/ou de positionnement concernant l'élément de démoulage (62) sont lues à partir de l'unité d'identification et/ou de positionnement (84) de l'élément de démoulage (62) à l'aide d'une unité d'écriture et/ou de lecture (86).
- dans lequel l'unité d'identification et/ou de positionnement (84) comprend au moins un détecteur de position, avec lequel la position dudit élément de démoulage (62) au moins est captée au-dessus de la filière de matriçage (24), dans lequel ledit élément de démoulage (62) au moins est mis automatiquement dans une position prescrite au-dessus de la filière de matriçage (24) en fonction d'une position saisie par ledit détecteur de position au moins.

10. Procédé selon la revendication 9, **caractérisé en ce que** la lecture des données d'identification et/ou de positionnement se fait sans fil.

11. Procédé selon l'une des revendications 9 ou 10, **caractérisé en ce que** les données d'identification et/ou de positionnement lues sont recoupées avec les paramètres de production de la presse à plateau tournant, notamment les paramètres de production concernant un type de pièce pressée à fabriquer avec la presse à plateau tournant.

12. Procédé selon la revendication 11, **caractérisé en ce qu'**un message d'avertissement et/ou un signal de commande est émis, au cas où le recoupement entre les paramètres de production et les données d'identification et/ou de positionnement aboutirait à un écart inadmissible.

13. Procédé selon la revendication 12, **caractérisé en ce que** le message d'avertissement est délivré sous la forme d'un signal optique et/ou acoustique.

14. Procédé selon l'une des revendications 12 ou 13, **caractérisé en ce que** le signal de commande sert à influencer automatiquement le processus opérationnel de la presse à plateau tournant.

15. Procédé selon l'une des revendications de 9 à 14, **caractérisé en ce qu'**il est exécuté avec une presse à plateau tournant selon l'une des revendications de 1 à 8.
